# EUROPÄISCHE PATENTSCHRIFT

(11) **EP 3 114 975 B1**
(45) Veröffentlichungstag und Bekanntmachung des Hinweises auf die Patenterteilung: **29.08.2018**
(21) Anmeldenummer: 15405045.4
(22) Anmeldetag: 10.07.2015
(51) Int. Cl.: A47J 42/38, A47J 31/42, A47J 42/06, A47J 42/10, A47J 42/40

(54) **MAHLWERK FÜR KAFFEEMASCHINEN**
GRINDER FOR COFFEE MACHINES
BROYEUR POUR MACHINES À CAFÉ

(43) Veröffentlichungstag der Anmeldung: 11.01.2017
(73) Patentinhaber: JURA ELEKTROAPPARATE AG, 4626 Niederbuchsiten (CH)
(72) Erfinder: Sahli, Georg, 3423 Ersigen (CH); Probst, Stephan, 4553 Subingen (CH); Büttiker, Philipp, 4625 Oberbuchsiten (CH)
(74) Vertreter: EGLI-EUROPEAN PATENT ATTORNEYS

(56) Entgegenhaltungen:
- EP-A1- 1 994 866
- EP-A1- 2 404 534
- EP-A1- 2 764 808
- CN-U- 203 458 258
- DE-U1- 9 115 709

## Beschreibung

Die Erfindung betrifft eine Mahlwerksvorrichtung zum Mahlen von Mahlgut, insbesondere zum Mahlen von Kaffeebohnen. Ein Mahlwerk ist z.B. aus Dokument EP 2 404 534 A1 bekannt. Derartige Mahlwerksvorrichtungen werden typischerweise zur Zerkleinerung von granularen Materialien verwendet, insbesondere auch von granularen Lebensmitteln. Der grundsätzliche Aufbau von Mahlwerksvorrichtungen ist bereits seit der Antike bekannt, wie ausgegrabene Mahlsteine zum Mahlen von Getreide zeigen.

Auch heute noch finden Mahlwerksvorrichtungen in vielen Gebieten der Technik Verwendung, insbesondere auch im Bereich der Verarbeitung von Lebensmitteln. Dabei ist bei "Lebensmitteln" nicht nur an Nahrungsmittel zu denken (wie beispielsweise von Getreide, welches zu Mehl zu vermahlen ist), sondern auch an Genussmittel, wie beispielsweise Kaffeebohnen, die zu Kaffeemehl zerkleinert werden müssen, damit mit diesen ein Kaffeegetränk bereitet werden kann.

In jüngster Zeit hat sich dabei insbesondere im Bereich des Kaffees (aber nicht nur hier) eine gewisse "Genusskultur" entwickelt, die durch unterschiedliche Prinzipien gekennzeichnet ist. Einerseits existiert ein Trend weg von handbetätigten hin zu selbsttätig arbeitenden Geräten. So hat die vor 100 Jahren weit verbreitet anzufindende handbetriebene Kaffeemühle weitgehend ausgedient. Stattdessen werden üblicherweise nur noch selbsttätig arbeitende Geräte, in der Regel elektrisch betriebene Kaffeemühlen, verwendet. Ein zweiter Trend besteht weg von einer Lebensmittelprozessierung, welche eine Vielzahl von einzelnen durchzuführenden Arbeitsschritten erfordert, hin zu einer Vollautomatisierung. So finden sich in vielen Privathaushalten zwischenzeitlich Kaffeevollautomaten, welche auf Knopfdruck hin aus den Rohzutaten (Wasser, ganze Kaffeebohnen, zum Teil auch Milch) selbsttätig und ohne weitere Benutzereingriffe eine Kaffeespezialität bereiten können (in diesem Zusammenhang sind beispielsweise Espresso, Cappuccino und Latte Macchiato zu nennen). Ein dritter Trend ist darüber hinaus die Nutzung von "weniger weit" vorverarbeiteten Lebensmittelrohstoffen. So nimmt der Konsum von ganzen Kaffeebohnen (gegenüber fertig gemahlenem, verpacktem Kaffeepulver) seit einigen Jahren spürbar zu (was zum Teil auch auf die zunehmende Verbreitung von Kaffeevollautomaten zurückzuführen ist). Auch ein höherer Qualitätsanspruch (frisch gemahlener Kaffee hat ein intensiveres und wohlschmeckenderes Aroma gegenüber fertig gemahlenem Kaffee, der "notgedrungen" mehrere Tage, Wochen oder Monate gelagert werden muss, bis dieser schlussendlich konsumiert wird, auch wenn dieser vakuumverpackt ist) stellt eine Erklärung für diesen Trend dar.

Die genannten Trends sind im gewählten Beispiel von Kaffee besonders stark ausgeprägt. Jedoch sind diese Trends auch in anderen Bereichen vorhanden. Beispielsweise nimmt auch die Verwendung von Haus-Getreidemühlen seit Jahren stetig zu (wenn auch lange nicht in dem Ausmass, wie dies bei Kaffeemühlen der Fall ist).

Die genannten Trends stellen die Hersteller von entsprechenden Geräten vor besondere Aufgaben. Insbesondere im häuslichen Bereich besteht ein grosses Bedürfnis an möglichst kleinen und kompakten Geräten. Darüber hinaus wird hier eine grosse Bandbreite an unterschiedlichen Geräten nachgefragt, die unterschiedlichsten Wünschen eine Vielzahl von heterogene Wünsche aufweisenden Verbrauchern Rechnung tragen sollen. Schliesslich ist auch eine vergleichsweise hohe Preissensibilität vorhanden, sodass die entsprechenden Geräte möglichst günstig im Verkauf sein sollen, sodass diese entsprechend kostengünstig hergestellt werden müssen.

Bisherige Kaffeevollautomaten, aber auch bisherige (elektrische) Haushaltskaffeemühlen weisen typischerweise zwei - meist kegelartig geformte Oberflächen aufweisende - Mahlkörper auf, die sich um eine Rotationsachse herum gegeneinander verdrehen lassen. Die zu mahlenden Kaffeebohnen (bzw. andere Lebensmittel) werden dabei einem sich zunehmend verjüngenden Spalt zwischen den beiden Mahlkörpern zugeführt. Durch die Drehbewegung der Mahlkörper relativ zueinander werden die Kaffeebohnen schliesslich zu Pulver vermahlen. Am radial äusseren Rand des Spalts zwischen den beiden Mahlkörpern wird das gemahlene Kaffeepulver aufgefangen und über eine (gegebenenfalls auch mehrere) Kaffeepulverausgabeöffnung abgeführt. Im Falle von Kaffeevollautomaten wird das so gemahlene Kaffeepulver einer Brüheinheit zugeführt, während es im Falle einer (elektrischen) Haushaltskaffeemühle einem Ausgabebehälter zugeführt wird. Zum Antrieb des Mahlwerks ist typischerweise ein Elektromotor vorgesehen. Die betreffenden Mahlwerke werden als Baugruppe aus den betreffenden Einzelteilen gefertigt und anschliessend im betreffenden "übergeordneten Gerät" (Kaffeevollautomat, Kaffeemühle, usw.) verbaut.

Gerade im Haushaltswarenbereich herrscht, wie oben bereits erwähnt, eine Nachfrage nach einer grossen Produktvielfalt vor. Diese beruht nicht nur auf technischen Erwägungen, sondern insbesondere auch auf ästhetischen Überlegungen (unterschiedlich ästhetisches Empfinden der Kundschaft). Zum Teil kommen aber auch Marketingüberlegungen ins Spiel, sodass beispielsweise ein Hersteller unterschiedliche Produktserien unter unterschiedlichen Markennamen verkauft, die sich optisch "ausreichend" voneinander unterscheiden sollen, sodass nicht, ohne Weiteres auf die Herkunft aus einem bestimmten, einzelnen Herstellungsbetrieb geschlossen werden kann.

Diese Überlegungen stellen ein Problem dar. Denn bislang ist es entweder erforderlich, für die Bereitstellung eines gewissen "Gesamtgerätedesigns" entsprechend ausgebildete Mahlwerke zu produzieren (denn ein gewisses "Gesamtgerätedesign" bedingt zumindest in einem gewissen Ausmass den für das Kaffeemahlwerk zur Verfügung stehenden Bauraum, insbesondere hinsichtlich dessen Abmessung und Formgebung). Umgedreht ist mit einer bestimmten vorhandenen Mahlwerksbaugruppe nur ein bestimmter Formenschatz an "Gesamtgeräten" realisierbar, was nicht immer eine gangbare Option darstellt.

Dementsprechend war es bislang erforderlich, eine vergleichsweise grosse Anzahl an unterschiedlich gestalteten Mahlwerksgruppen zu produzieren. Dies bedingt erhöhten Aufwand, da die Fertigungsstätten entsprechend komplex gestaltet sein müssen (unterschiedliche Produktionsstrassen oder Wechsel der verwendeten Werkzeuge von Zeit zu Zeit), aber auch erhöhten Aufwand bei der Lagerhaltung. Die Probleme treten dabei nicht nur bei der Lagerhaltung zu Produktionszwecken auf, sondern insbesondere auch bei der Zurverfügungstellung von Ersatzteilen.

Bislang war für dieses Problem keine Lösung bekannt, sieht man einmal davon ab, dass man sich in der Vergangenheit häufiger auf - gewisse "Kompromisse" bei der Gestaltung von Kaffeevollautomaten (oder sonstigen Geräten) verständigt hat, um die Flut an unterschiedlichen Mahlwerksbaugruppen auf ein handhabbares Mass zu begrenzen.

Dementsprechend besteht die Aufgabe der vorliegenden Erfindung darin, eine Mahlwerksvorrichtung zum Mahlen von Mahlgut, insbesondere zum Mahlen von Kaffeebohnen, vorzuschlagen, welche gegenüber im Stand der Technik bekannten Mahlwerksvorrichtungen verbesserte Eigenschaften aufweist. Eine weitere Aufgabe der Erfindung besteht darin, eine Kaffeemühle oder Kaffeemaschine, insbesondere einen Kaffeevollautomaten, vorzuschlagen, welche bzw. welcher gegenüber im Stand der Technik bekannten Kaffeemühlen, Kaffeemaschinen bzw. Kaffeevollautomaten verbesserte Eigenschaften aufweist.

Die vorgeschlagene Erfindung löst diese Aufgabe.

Es wird vorgeschlagen, eine Mahlwerksvorrichtung zum Mahlen von Mahlgut, insbesondere zum Mahlen von Kaffeebohnen, welche ein erstes Mahlelement und ein zweites Mahlelement aufweist und bei der das erste Mahlelement und das zweite Mahlelement durch Antrieb über eine Antriebswelleneinrichtung relativ zueinander um eine Mahlrotationsachse drehbar sind und bei der die Antriebswelleneinrichtung abweichend von der Mahlrotationsachse positioniert ist, (also) insbesondere angeordnet und/oder ausgerichtet ist und die eine seitlich zu den Mahlelementen angeordnete Ausgabeöffnungseinrichtung für gemahlenes Mahlgut aufweist, derart auszubilden, dass die Ausgabeöffnungseinrichtung und die Antriebswelleneinrichtung unterschiedlich zueinander positionierbar sind. Bei der unterschiedlichen Positionierung von Mahlrotationsachse und Antriebswelleneinrichtung zueinander kann es sich insbesondere um einen Axialversatz (beide Richtungen verlaufen im Wesentlichen parallel zueinander, weisen jedoch einen gewissen Abstand zueinander auf) und/oder um eine Winkelstellung der Richtungen von Antriebswelleneinrichtung und Mahlrotationsachse zueinander handeln. Insbesondere ist eine "relative Winkellage" von Antriebswelleneinrichtung und Mahlrotationsachse von 90° (rechter Winkel) oftmals besonders vorteilhaft. Dabei ist es möglich, dass sich Mahlrotationsachse und (Richtungsachse der) Antriebswelleneinrichtung in einem gewissen Punkt (annähernd) schneiden. Denkbar ist jedoch eine "Kombination" von Abstand und Winkellage (insbesondere rechtwinklige Anordnung), sodass sich eine windschiefe Lage von Antriebswelleneinrichtung und Mahlrotationsachse ergibt. Es ist denkbar, dass die Antriebswelleneinrichtung und die Ausgabeöffnungseinrichtung "in einer unterschiedlichen Anzahl von möglichen Positionen" zueinander positionierbar sind. Im typischen "Minimalfall" können diese in zwei unterschiedliche Positionen zueinander gebracht werden. Oftmals wird es jedoch auch sinnvoll sein, wenn eine Mehrzahl von unterschiedlichen (diskreten) Positionierungen möglich ist. Insbesondere ist in diesem Zusammenhang eine (teilweise) symmetrische n-zählige Geometrie denkbar, da sich hierdurch oftmals ein besonders einfacher mechanischer Aufbau realisieren lässt. Denkbar ist es aber auch, dass beliebige Winkellagen eingenommen werden können. Auch sind "Kombinationen" denkbar, beispielsweise derart, dass eine stufenlose Positionierbarkeit in einem gewissen Winkelbereich möglich ist (beispielsweise +/- 10°) und "weitergehende Schritte" durch eine diskrete Positionsänderung realisierbar sind; im Ergebnis kann dadurch nach wie vor eine stufenlose Positionierbarkeit über einen besonders grossen Winkelbereich hinweg realisiert werden. Die unterschiedliche Positionierbarkeit zueinander kann sich dabei jeweils auf eine unterschiedliche Art der Positionierung beziehen, insbesondere auf eine unterschiedliche Anordnung und/oder Ausrichtung relativ zueinander. Dabei ist es möglich, dass unterschiedliche Arten der Realisierung miteinander "kombiniert" werden können, beispielsweise dass in einer bestimmten Richtung eine stufenlose relative Positionierbarkeit gegeben ist, wohingegen in einer anderen Richtung lediglich eine diskrete Positionierbarkeit möglich ist. Selbstverständlich sind hier (im Wesentlichen) beliebige Arten von Kombinationen denkbar. Oftmals wird die unterschiedliche Positionierbarkeit von Antriebswelleneinrichtung und Ausgabeöffnungseinrichtung in einer unterschiedlichen Winkellage zueinander bestehen, wobei die unterschiedliche Winkellage sich oftmals auf einen Winkelversatz bezieht, der (zumindest in Projektion) in einer Ebene gegeben ist, welche normal zur Mahlrotationsachse steht. Mit anderen Worten können Ausgabeöffnungseinrichtung und Antriebswelleneinrichtung also in der gleichen, aber auch in unterschiedlichen "Höhen" längs der Mahlrotationsachse angeordnet sein. Nimmt man eine Ebene, in der sowohl die Mahlrotationsachse als auch die Ausgabeöffnungseinrichtung (insbesondere ein Referenzpunkt der Ausgabeöffnungseinrichtung; typischerweise die "Mitte" derselben) bzw. die Antriebswelleneinrichtung liegen, so können die betreffenden Ebenen einen bestimmten, unterschiedlich wählbaren Winkel einschliessen (unterschiedliche Positionierbarkeit). Denkbar ist aber auch zusätzlich oder alternativ eine unterschiedliche Winkelausrichtung bezüglich einer Ausgaberichtung des Mahlguts ("Schrägstehen" eines Ausgabekanals) und einer Ausrichtung der Antriebswelle, sodass die betreffenden Längsrichtungen sich gegebenenfalls (annähernd) in einem Punkt schneiden oder windschief stehen. Selbstverständlich ist es möglich, nicht nur eine Ausgabeöffnungseinrichtung vorzusehen, sondern auch eine Mehrzahl an Ausgabeöffnungseinrichtungen. Dabei ist es typisch, dass die Ausgabeöffnungseinrichtungen relativ zueinander nicht veränderlich positionierbar sind (feste Lage der einzelnen Ausgabeöffnungseinrichtungen zueinander). Damit kann gewissermassen jede einzelne Ausgabeöffnungseinrichtung (in Kombination mit den anderen) in eine unterschiedliche Position zur Antriebswelleneinrichtung gebracht werden. Ebenso denkbar ist es aber auch, dass eine einzelne oder eine Mehrzahl von Ausgabeöffnungseinrichtungen unterschiedlich zur Antriebswelleneinrichtung positioniert werden können, wohingegen die "verbleibenden" Ausgabeöffnungseinrichtungen nicht unterschiedlich zur Antriebswelleneinrichtung positionierbar sind. Dies führt in der Regel dazu, dass ein Teil der Ausgabeöffnungseinrichtungen relativ zu einem anderen Teil der Ausgabeöffnungseinrichtungen bewegt werden kann. Möglich ist es im Übrigen, dass die unterschiedliche Positionierbarkeit auf unterschiedlichste Art und Weise realisiert werden kann. So ist es möglich, dass die Mahlwerksvorrichtung derart aufgebaut ist, dass "im Wesentlichen nur" die Ausgabeöffnungseinrichtungen relativ zu der verbleibenden Mehrzahl von Komponenten der Mahlwerksvorrichtung bewegt werden können. Zusätzlich oder alternativ ist es aber auch möglich, dass "im Wesentlichen nur" die Antriebswelleneinrichtung relativ zu der verbleibenden Mehrzahl an Komponenten der Mahlwerksvorrichtung positioniert werden kann. Der Vollständigkeit halber wird darauf hingewiesen, dass es selbstverständlich auch möglich ist, dass (ein Teil) der Ausgabeöffnungseinrichtungen im Gegenteil der Zufuhr von Material dient. Korrekterweise müsste man hier von "Eingabeöffnungseinrichtungen" sprechen, was (zunächst) jedoch aus Gründen der Einfachheit nicht gemacht werden soll. Dennoch soll es im Rahmen dieser Anmeldung als ausdrücklich offenbart gelten (und dementsprechend entsprechende Änderungen möglich sein), dass der Begriff "Ausgabeöffnungseinrichtung" (zumindest in einem Teil der Fälle, in denen dieser Begriff im Folgenden verwendet wird) durch den Begriff "Eingabeöffnungseinrichtung", gegebenenfalls auch durch "Ausgabeöffnungseinrichtung und/oder Eingabeöffnungseinrichtung" ersetzt werden kann.

Bevorzugt ist es, wenn bei der Mahlwerksvorrichtung die Ausgabeöffnungseinrichtung und die Antriebswelleneinrichtung zumindest bereichsweise stufenlos unterschiedlich zueinander positionierbar sind. Mit einer derartigen Ausbildung der Mahlwerksvorrichtung ist ein besonders universeller Aufbau der Mahlwerksvorrichtung möglich. Insbesondere lässt sich hierdurch eine Vielzahl von benötigten Geometrien der Mahlwerksvorrichtung abdecken. In der Regel ist eine deutliche Einschränkung der zu produzierenden und vorrätig zu haltenden Anzahl an unterschiedlichen Mahlwerksvorrichtungstypen die Folge. Selbstverständlich ist es durchaus denkbar, dass nach wie vor bestimmte unterschiedliche Mahlwerksvorrichtungen erforderlich sind (wobei sich diese jedoch typischerweise oftmals insbesondere hinsichtlich Mahldurchsatz, Dauerbetriebsfestigkeit, unterschiedlicher Leistung eines Elektromotors und dergleichen unterscheiden werden (was im Übrigen auch für nicht-stufenlos unterschiedlich zueinander positionierbare Mahlwerksvorrichtungen gilt)). Die stufenlose Positionierbarkeit kann dabei gewisse Nachteile aufweisen, wie beispielsweise einen komplexeren Aufbau, einen höheren Aufwand bei der Montage der Mahlwerksvorrichtung und dergleichen, die jedoch durch die besonders hohe Flexibilität oftmals mehr als überkompensiert werden können.

Möglich ist es aber auch, dass die Ausgabeöffnungseinrichtung und die Antriebswelleneinrichtung zumindest bereichsweise gestuft unterschiedlich zueinander positionierbar sind. Dies kann zu Vorteilen hinsichtlich eines einfacheren mechanischen Aufbaus, einer einfacheren Montage und insbesondere auch einer besonders hohen mechanischen Belastbarkeit einzelner Teile der Mahlwerksvorrichtung relativ zueinander führen, ohne dass die betreffenden Teile beispielsweise "gegeneinander verrutschen" bzw. sich "gegeneinander verdrehen".

Obgleich es auf den ersten Blick befremdlich erscheint, kann auch eine Kombination aus (bereichsweise) stufenlos unterschiedlicher Positionierbarkeit und (bereichsweise) gestuft unterschiedlicher Positionierbarkeit realisiert werden und sinnvoll sein. Einerseits kann sich die unterschiedliche "Art" der Positionierbarkeit auf unterschiedliche Richtungen beziehen. Andererseits ist es auch denkbar, dass eine Rasterung (nicht-stufenlose relative Positionierbarkeit zueinander) für gewisse "Winkelsprünge" verwendet wird (beispielsweise Möglichkeit eines "sprungartigen Verdrehens" um 15°, 30°, 45° oder dergleichen). Eine bereichsweise stufenlose unterschiedliche Positionierbarkeit kann beispielsweise auf eine Verdrehbarkeit von +/- 10° (zum Beispiel bei 15°-"Sprüngen"; Vorteil hinsichtlich einer gewissen Überlappung zur besonders einfachen Montage) erfolgen. Durch Kombination von "stufenartigen Sprüngen" und "stufenloser Positionierbarkeit in gewissen Bereichen" kann eine im Ergebnis vollständige stufenlose Positionierbarkeit realisiert werden.

Möglich ist es, dass die Mahlwerksvorrichtung derart ausgebildet ist, dass die unterschiedliche Positionierbarkeit von Ausgabeöffnungseinrichtung und Antriebswelleneinrichtung zueinander sich zumindest auf eine Winkellage von Ausgabeöffnungseinrichtung und Antriebswelleneinrichtung zueinander bezieht, insbesondere in einer Ebene, die normal zur Mahlrotationsachse steht. Auch an Projektionen der betreffenden Richtungen auf diese Ebene ist selbstverständlich zu denken, sodass hierdurch Ausgabeöffnungseinrichtung und Antriebswelleneinrichtung in einer unterschiedlichen "Höhe" der Mahlrotationsachse angeordnet sein können, um ein Beispiel zu nennen. Eine derartige relative Positionierbarkeit zueinander kann oftmals mit einem geringen konstruktiven und mechanischen Aufwand realisiert werden. Dennoch kann mit einer solchen Anordnung ein besonders grosser Bereich an unterschiedlichen denkbaren (und typischen) Einbaupositionen abgedeckt werden. Darüber hinaus stellt eine derartige Anordnung, zumindest für manche Arten des Antriebseintrags bzw. einer Übertragung eines "initialen Bewegungseintrags", die aufgrund der Kraftübertragung "typischerweise im Wesentlichen zulässige" Positionierungsvariation dar.

Möglich ist es weiterhin, dass die Mahlwerksvorrichtung zwei miteinander koppelbare Baugruppen aufweist, wobei die erste der miteinander koppelbaren Baugruppen die Ausgabeöffnungseinrichtung aufweist und die zweite der miteinander koppelbaren Baugruppen die Antriebswelleneinrichtung aufweist. In der Regel sind die Ausgabeöffnungseinrichtung bzw. die Antriebswelleneinrichtung starr bzw. integral mit der betreffenden Baugruppe ausgebildet. Durch einen derartigen Aufbau "verlagert sich die unterschiedliche Positionierbarkeit von Ausgabeöffnungseinrichtung und Antriebswelleneinrichtung zueinander" meist auf eine unterschiedliche Positionierung der beiden Baugruppen relativ zueinander. Dementsprechend sollen diese beiden "gedanklichen Herangehensweisen" im Rahmen dieser Anmeldung als gleichwertig und beliebig austauschbar gelten. Durch die vorgeschlagene Ausbildung ist es möglich, zwei weitgehend universell verwendbare Baugruppen herstellen zu können, die durch einfaches Zusammenfügen eine besonders universell verwendbare Mahlwerksvorrichtung ergeben. Im Übrigen soll es möglich sein, auf einen Bausatz, aufweisend eine erste Baugruppe, welche eine Ausgabeöffnungseinrichtung aufweist, und aufweisend eine zweite Baugruppe, welche die Antriebswelleneinrichtung aufweist und im Sinne der vorherigen (und folgenden) Beschreibung konstruiert und gegebenenfalls weitergebildet ist, gesondert Schutz beantragen zu können.

Eine vorteilhafte Weiterbildung kann sich ergeben, wenn die Mahlwerksvorrichtung derart ausgebildet ist, dass die Antriebswelleneinrichtung und die Mahlrotationsachse windschief zueinander stehen und insbesondere einen im Wesentlichen rechten Winkel zueinander einschliessen, wobei bevorzugt die Kopplung von Antriebswelleneinrichtung und wenigstens einem Mahlelement unter Verwendung einer schneckentriebartigen Kopplung erfolgt. Eine solche Ausbildung bietet oftmals besondere Vorteile hinsichtlich eingenommenem Bauraum und/oder der Kraftübertragung. Insbesondere ist es mit dieser Ausbildung auf vergleichsweise einfache Weise möglich, die Drehzahl eines besonders schnell drehenden Elektromotors auf eine vergleichsweise langsame Drehzahl der Mahlelemente relativ zueinander umzusetzen. Hierdurch kann ein oberflächliches Verbrennen des (teilweise) gemahlenen Mahlguts verhindert werden, was nachteilige Geschmacksveränderungen zur Folge haben könnte. Unter einem rechten Winkel im Zusammenhang mit windschief zueinander stehenden Achsen/Geraden ist im vorliegenden Zusammenhang insbesondere zu verstehen, dass eine Gerade (insbesondere die Antriebswelleneinrichtung) innerhalb (bzw. parallel zu) einer Ebene liegt, die normal zu einer anderen Geraden (insbesondere der Mahlrotationsachse) steht.

Eine weitere vorteilhafte Ausbildung der Mahlwerksvorrichtung kann sich ergeben, wenn bei der Mahlwerksvorrichtung die Antriebswelleneinrichtung und die Mahlrotationsachse beabstandet zueinander angeordnet sind und insbesondere im Wesentlichen parallel zueinander verlaufen, wobei bevorzugt die Kopplung von Antriebswelleneinrichtung und wenigstens einem Mahlelement unter Verwendung einer Kraftübertragungsanordnung erfolgt, insbesondere unter Verwendung eines Kettenantriebs, eines Riemenantriebs oder eines Zahnradantriebs. Eine derartige Ausbildung kann sich beispielsweise unter Bauraumgesichtspunkten als vorteilhaft erweisen. (Nicht nur) in diesem Zusammenhang wird darauf hingewiesen, dass sich ein "Bauraumerfordernis" nicht nur auf den benötigten Bauraum beziehen muss, sondern auch "im erweiterten Sinne aufgefasst" werden kann, wie beispielsweise auch die Anordnung und Lage von weiteren Komponenten, wie beispielsweise Kaffeebohnenzuführungsschächten, Kaffeemehlabführungskanälen, Brühvorrichtungen und dergleichen umfassen kann. Es kann also gewissermassen die "Mahlwerksvorrichtuhgslogistik" mit zu berücksichtigen sein. Die Kraftübertragung kann dabei in beliebiger Weise mit oder ohne Über- bzw. Untersetzung erfolgen. Typischerweise wird eine höhere Drehzahl der Antriebswelleneinrichtung (Elektromotor oder dergleichen) auf eine niedrigere Drehzahl der Mahlelemente relativ zueinander umgesetzt werden, da dies üblichen technischen Charakteristika entspricht.

Eine weitere mögliche Ausbildungsweise der Mahlwerksvorrichtung ergibt sich, wenn diese eine Positionsfixierungseinrichtung zur Fixierung der Position von Antriebswelleneinrichtung und Ausgabeöffnungseinrichtung relativ zueinander aufweist, wobei diese bevorzugt als reversible Positionsfixierungseinrichtung und/oder als irreversible Positionsfixierungseinrichtung ausgebildet ist. Im Falle einer reversiblen Positionsfixierungseinrichtung ist eine einfache Rekonfiguration möglich, was insbesondere im Falle von Reparaturen vorteilhaft sein kann. Im Falle einer irreversiblen Positionsfixierungseinrichtung kann beispielsweise nach der Fertigung der Mahlwerksvorrichtung ein unbefugter Wartungszugriff wirkungsvoll unterbunden werden. In diesem Zusammenhang ist zu erwähnen, dass eine irreversible Positionsfixierungseinrichtung auch unter Nutzung von Einwegartikeln denkbar ist, sodass die Positionsfixierungseinrichtung zwar bis zu einem gewissen Grad irreversibel ist, ein Austausch derselben (Ersatz durch eine neue Positionsfixierungseinrichtung) jedoch einen lediglich untergeordneten oder zu vernachlässigenden materiellen Aufwand darstellt. Eine "Kombination" aus reversibler und irreversibler Positionsfixierungseinrichtung ist denkbar, wenn unterschiedliche Positionsfixierungseinrichtungen für unterschiedliche Richtungen und/oder in unterschiedlichen "Variationsintervallen" genutzt werden (beispielsweise Kombination aus stufenloser Positionierbarkeit in gewissen Winkelbereichen und relativer Positionierbarkeit in gewissen Stufen). Auch ist es selbstverständlich denkbar, dass eine Mehrzahl an Positionsfixierungseinrichtungen vorgesehen wird, die sich gegebenenfalls vorteilhaft ergänzen.

Möglich ist es weiterhin, dass bei der Mahlwerksvorrichtung die Positionsfixierungseinrichtung kraftschlüssig und/oder formschlüssig und/oder stoffschlüssig wirkt und/oder als verrastende, insbesondere als clipsartig verrastende und/oder als bajonettartig verrastende Einrichtung ausgebildet ist. Derartige Arten der Fixierung haben sich in ersten Versuchen (zum Teil auch in Kombination miteinander) als besonders vorteilhaft erwiesen.

Der Vollständigkeit halber wird darauf hingewiesen, dass auch bei der Ausbildung der Mahlwerksvorrichtung aus zwei (gegebenenfalls auch mehr) miteinander zu verbindenden Baugruppen eine reversible und/oder irreversible Verbindung miteinander denkbar ist; diese kann kraftschlüssig und/oder formschlüssig und/oder stoffschlüssig wirken und/oder als verrastende, insbesondere als clipsartig und/oder bajonettartig verrastende Einrichtung ausgebildet sein.

Weiterhin wird vorgeschlagen, dass bei der Mahlwerksvorrichtung die Positionsfixierungseinrichtung zumindest teilweise als gesondert handhabbare Einrichtung ausgebildet ist und/oder zumindest teilweise mit einer gesondert handhabbaren Einrichtung zusammenwirkt. Hierdurch kann in der Regel ein besonders einfacher mechanischer Aufbau realisiert werden. Insbesondere kann eine derartige Einrichtung besonders einfach und kostengünstig als "Einwegartikel" vorgesehen werden (insbesondere Verwendung im Sinne der vorherigen Beschreibung).

Weiterhin wird vorgeschlagen, dass die Mahlwerksvorrichtung eine Antriebseinrichtung aufweist. Insbesondere kann es sich dabei um einen vorzugsweise integrierten Elektromotor handeln. In einem solchen Fall handelt es sich bei der Mahlwerksvorrichtung um eine "höherwertige" bzw. "weitergehend integrierte" Baugruppe, sodass bei der Montage des "schlussendlichen Geräts" (beispielsweise eines Kaffeevollautomaten) einige Arbeitsschritte entfallen können.

Weiterhin ist es denkbar, dass die Mahlwerksvorrichtung eine Brühvorrichtung aufweist. Auch hier handelt es sich um eine "höherwertige" bzw. "weitergehend integrierte" Baugruppe, die insbesondere die Montage des "endgültigen Geräts" vereinfachen kann.

Weiterhin wird vorgeschlagen, dass die Mahlwerksvorrichtung genau eine und/oder eine Mehrzahl von Ausgabeöffnungseinrichtungen aufweist und/oder dass bei der Mahlwerksvorrichtung zumindest eine Ausgabeöffnungseinrichtung in einem radialen Aussenbereich zumindest eines Mahlelements angeordnet ist. Ein derartiger Aufbau der Mahlwerksvorrichtung entspricht den typischerweise geforderten Anforderungen an Mahlwerksvorrichtungen für Kaffeemühlen bzw. Kaffeevollautomaten. Dementsprechend ist eine derartig ausgebildete Mahlwerksvorrichtung wirtschaftlich besonders interessant und kann beispielsweise als "snap in"-Lösung genutzt werden.

Weiterhin wird vorgeschlagen, dass die Mahlwerksvorrichtung zumindest eine Mahlwerksgehäusung aufweist, insbesondere eine Mahlwerksgehäusung mit zumindest einer integral ausgebildeten Ausgabeöffnungseinrichtung. Das fertig gemahlene Pulver (beispielsweise Kaffeepulver) muss typischerweise von der Umgebung "ferngehalten werden", da es ansonsten die Umgebung verschmutzen und gegebenenfalls zu Funktionsbeeinträchtigungen von in der Nähe befindlichen Komponenten führen könnte. Auch der hygienische Aspekt ist selbstverständlich nicht zu vernachlässigen. Dementsprechend ist es in aller Regel erforderlich, eine Gehäusung im Bereich der Mahlelemente vorzusehen. Dementsprechend kann diese Gehäusung in einem Bereich des typischerweise vorhandenen Mahlspalts zwischen den beiden Mahlelementen platziert werden, um so auf einfache und effektive Weise das Mahlgut abzuführen. Typischerweise wird die Ausgabeöffnung leicht in Richtung der Gravitationsrichtung versetzt sein und/oder ein Mahlgutsammelkanal und/oder ein Mahlgutgebläse oder dergleichen zusätzlich vorgesehen sein. Auch sonstige, grundsätzlich im Stand der Technik bekannte Mahlgutaustragungsmittel bzw. Mahlgutaustragungshilfsmittel sind selbstverständlich im Zusammenhang mit der vorgeschlagenen Mahlwerksvorrichtung denkbar und oftmals auch sinnvoll.

Schliesslich werden noch eine Kaffeemühle, eine Kaffeemaschine und/oder ein Kaffeevollautomat vorgeschlagen, die eine Mahlwerksvorrichtung vom vorab beschriebenen Aufbau aufweisen. Eine derartige Kaffeemühle, Kaffeemaschine bzw. ein derartiger Kaffeevollautomat weist die bereits vorab beschriebenen Vorteile und Eigenschaften zumindest in analoger Weise auf. Auch eine Weiterbildung im Sinne der vorherigen Beschreibung ist - zumindest in Analogie - möglich und in der Regel sinnvoll.

Weitere Einzelheiten der Erfindung und insbesondere beispielhafte Ausführungsformen der vorgeschlagenen Vorrichtung werden im Folgenden anhand der beigefügten Zeichnungen erläutert. Es zeigen:
- Fig. 1: ein erstes Ausführungsbeispiel eines Kaffeeautomatenmahlwerks in unterschiedlichen Winkellagen von Ausgabetrichter 2 für gemahlenes Kaffeepulver und Elektromotor 3 zum Antreiben des Mahlwerks in Draufsicht in unterschiedlichen Winkelpositionen;
- Fig. 2: das erste Ausführungsbeispiel eines Kaffeeautomatenmahlwerks 1 in einer perspektivischen Explosionsansicht;
- Fig. 3-6: das erste Ausführungsbeispiel eines Kaffeeautomatenmahlwerks in unterschiedlichen Schritten des Zusammenfügens, jeweils in einer perspektivischen Draufsicht a) sowie einer Schnittansicht b) durch einen Kopplungsbereich einer Mahlwerkseinheit und einer Antriebseinheit;
- Fig. 7: ein zweites Ausführungsbeispiel eines Kaffeeautomatenmahlwerks in unterschiedlichen Schritten eines Zusammenbauvorgangs, jeweils in perspektivischer Ansicht;
- Fig. 8: ein drittes Ausführungsbeispiel eines Kaffeeautomatenmahlwerks in einem Längsschnitt a) und in einer schematischen Draufsicht b) von der Seite aus.

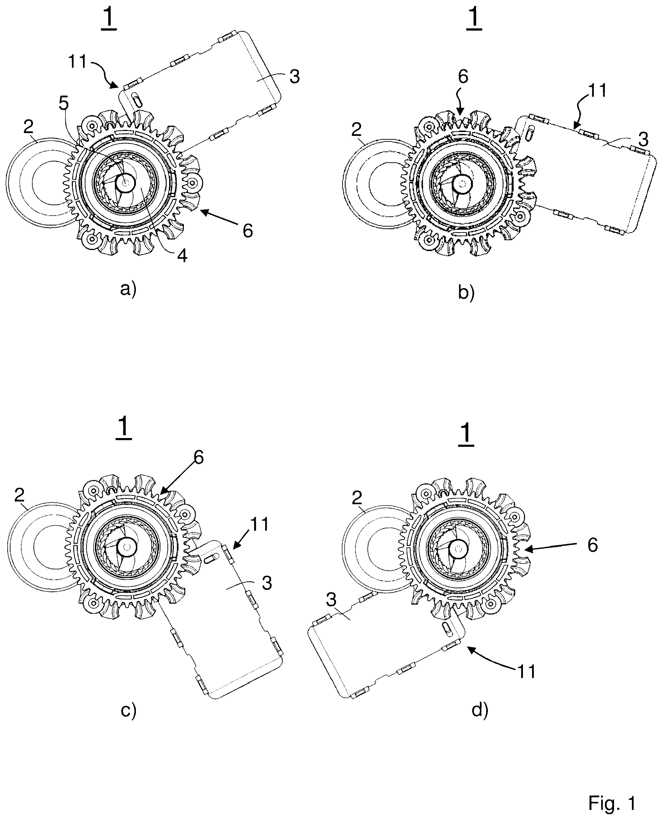

In Fig. 1 ist ein erstes mögliches Ausführungsbeispiel für ein anpassbares Kaffeeautomatenmahlwerk 1 in insgesamt vier, beispielhaft gewählten Position a) bis d) dargestellt. Die "Anpassbarkeit" bezieht sich im dargestellten Ausführungsbeispiel auf eine relative Verdrehbarkeit von Elektromotor 3 (Antriebseinheit 11), der dem Antrieb des eigentlichen Mahlwerks, bestehend aus zwei gegeneinander um eine Rotationsachse 5 (in Fig. 1 senkrecht zur Zeichenebene) verdrehbaren Mahlkörpern 4, dient, und der Mahlwerkseinheit 6. Ein derartiger Aufbau einer Mahlwerkseinheit 6 ist grundsätzlich bekannt. Lediglich der Vollständigkeit halber: Der obere Mahlkörper 4 weist eine zentrale Öffnung auf, durch die zu mahlendes Mahlgut (im folgenden Beispiel Kaffeebohnen) in den eigentlichen Mahlwerksbereich eintreten kann (insbesondere in einen zwischen den beiden Mahlkörpern 4 befindlichen Mahlschlitz). Im Mahlschlitz werden die Kaffeebohnen pulverisiert und treten über eine Ausgabeöffnung in den Ausgabetrichter 2 ein, von wo aus sie beispielsweise einer Brüheinheit zugeführt werden (vorliegend nicht näher dargestellt).

Der Elektromotor 3, der dem Antrieb der eigentlichen Mahlwerkseinheit 6 dient, ist im in Fig. 1 dargestellten Aüsführungsbeispiel senkrecht bzw. windschief zur Rotationsachse 5 (bezogen auf seine Motorenspindel 31, welche mittig in Längsrichtung des Motorengehäuses verläuft) angeordnet (in Fig. 1 ist die Motorenspindel 31 nicht im Detail dargestellt, sondern die räumliche Lage der Längsachse der Motorenspindel 31 durch eine strichpunktierte, mit dem Bezugszeichen 31 versehene Linie angedeutet).

Beim in Fig. 1 dargestellten Ausführungsbeispiel kann die Position des Elektromotors 3 in 30°-Schritten relativ zum Ausgabetrichter 2 verändert werden (Änderung des eingeschlossenen Winkels von Elektromotor 3 und Ausgabetrichter 2). Wie man aus Fig. 1 erkennen kann, ist ein gewisser Winkelbereich nicht realisierbar (vorliegend sind drei Positionierungsmöglichkeiten nicht erreichbar; dies entspricht einem "verbotenen Bereich" von 90°). Wie man aus einer Zusammenschau von insbesondere Fig. 1, 2 und 6 leicht erkennen kann, beruht dieser "verbotene Bereich" auf rein geometrischen Platzerwägungen: Bei dem gewählten Aufbau des Kaffeeautomatenmahlwerks 1 müssten ansonsten Teile des Elektromotors 3 und des Ausgabetrichters 2 den gleichen Raumbereich einnehmen - was natürlich nicht möglich ist. Selbstverständlich ist es denkbar, dass bei einem unterschiedlichen Aufbau des Kaffeeautomatenmahlwerks 1 auch dieser "verbotene Bereich" "erlaubt ist". Ebenso ist es möglich, dass der "verbotene Bereich" kleiner oder grösser gewählt werden kann. Die zugrunde liegenden geometrischen Erwägungen sind dem Fachmann ohne Weiteres einsichtig und nachvollziehbar.

Auch ist die grundsätzliche Führung des zu mahlenden Materials (vor dem Mahlvorgang, während des Mahlvorgangs sowie nach dem Mahlvorgang) grundsätzlich im Stand der Technik bekannt. Insbesondere tritt das bereits gemahlene Produkt (vorliegend Kaffeepulver) durch eine entsprechende Ausgabeöffnung, die in der Gehäusung 8 der Mahlwerkseinheit 6 vorgesehen ist, in den Ausgabetrichter 2 über. Um einen Rückstau von gemahlenem Kaffeepulver zu vermindern und/oder um zu ermöglichen, dass zwischen zwei Mahlvorgängen, die zum Teil zeitlich relativ weit auseinanderliegen können, möglichst wenig Kaffeepulver im Kaffeeautömatenmahlwerk 1 verbleibt, sind unterschiedlichste Massnahmen bekannt. Diese können in aller Regel zumindest weitgehend unabhängig vom vorliegend gemachten Vorschlag der unterschiedlichen Positionierbarkeit von Ausgabetrichter 2 und Elektromotor 3 relativ zueinander realisiert werden.

Es ist leicht einsichtig, dass das Kaffeeautomatenmahlwerk 1 aufgrund der unterschiedlichen Positionierbarkeit von Ausgabetrichter 2 und Elektromotor 3 auf unterschiedlichste Einbausituationen angepasst werden kann. Daher kann das Kaffeeautomatenmahlwerk 1 in einer grösseren Anzahl von unterschiedlich gestalteten Kaffeemaschinen, Kaffeevollautomaten bzw. Kaffeemühlen verwendet werden. Dementsprechend ist es nicht mehr erforderlich, eine entsprechend grosse Anzahl an unterschiedlich ausgerichteten Kaffeeautomatenmahlwerken zu produzieren und zu lagern (um diese vorrätig zu halten), so wie dies bislang im Stand der Technik erforderlich ist.

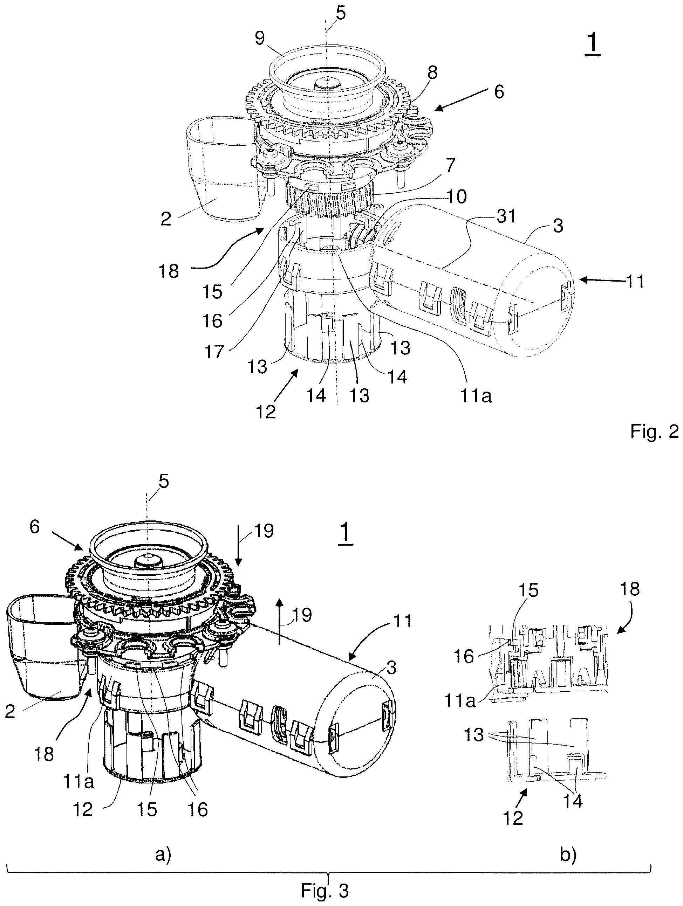

In Fig. 2 ist das Kaffeeautomatenmahlwerk 1 in einer Explosionsdarstellung in perspektivischer Draufsicht dargestellt. In dieser Darstellung sind weitere Details des Aufbaus des Kaffeeautomatenmahlwerks 1 zu erkennen.

So ist zu erkennen, dass das Kaffeeautomatenmahlwerk 1 im Wesentlichen aus drei vorgefertigten Baugruppen besteht, die durch den im Folgenden näher dargestellten Montagevorgang miteinander verbunden werden.

Den oberen Teil des Kaffeeautomatenmahlwerks 1 bildet die eigentliche Mahlwerkseinheit 6 (mit den innenliegenden Mahlkörpern, in den Fig. 2 - 6 nicht näher zu erkennen). Die Relativbewegung der beiden Mahlkörper 4 um eine Rotationsachse 5 herum erfolgt durch eine Drehbewegung des unteren Mahlkörpers 4 mittels eines Zahnrads 7. Dieses Zahnrad 7 ist drehfest mit dem unteren Mahlkörper 4 verbunden. Der obere Mahlkörper 4 ist vorliegend drehfest mit der Gehäusung 8 der Mahlwerkseinheit 6 verbunden. Gut zu erkennen ist auch der Zuführtrichter 9, über den die zu mahlenden Kaffeebohnen der Mahlwerkseinheit 6 zugeführt werden.

In Fig. 2 in der "Mitte" ist die Antriebseinheit 11 zu erkennen, die (wie im Folgenden erläutert) mit der Mahlwerkseinheit 6 zusammengesteckt wird und anschliessend mit der in Fig. 2 unten zu erkennenden Verriegelungskrone 12 verrastend blockiert wird, um so ein unerwünschtes Lösen von Mahlwerkseinheit 6 und Antriebseinheit 11 im Betrieb zu vermeiden.

Die Antriebseinheit 11 weist einen ringförmigen Bereich 11a auf, der der Aufnahme des unteren Teils der Gehäusung 8 der Mahlwerkseinheit 6 dient, insbesondere auch der Aufnahme des Zahnrads 7. In Fig. 2 ist auch die Antriebsschnecke 10 für das Zahnrad 7 zu erkennen. Eine Drehbewegung der Antriebschnecke 10 bewirkt eine entsprechend untersetzte Drehbewegung des Zahnrads 7 - und damit eine entsprechende Mahlbewegung der Mahlkörper 4 gegeneinander. Die Antriebschnecke 10 ist drehfest auf der Mötorenspindel 31 des Elektromotors 3 montiert.

Ein derartiger Antrieb einer Mahlwerkseinheit 6 mittels eines Schnecken-Zahnrad-Getriebes ist grundsätzlich im Stand der Technik bekannt und wird relativ häufig verwendet. Aus Gründen der Kürze wird dieser daher nicht eingehender beschrieben.

Die Verriegelungskrone 12 besteht aus zwei konzentrisch angeordneten Ringen aus vorstehenden Stiften 13, 14. Der äussere Ring wird von den eigentlichen Verriegelungsstiften 13 gebildet, während der konzentrisch innere Ring von Einschnappstiften 14 gebildet wird. Die Funktion der Verriegelungsstifte 13 und der Einschnappstifte 14 wird im Folgenden noch eingehend beschrieben. Die Verriegelungskrone 12 kann beispielsweise einstückig aus einem in gewissen Grenzen elastisch deformierbaren Kunststoffmaterial gefertigt werden. Insbesondere kann die Verriegelungskrone 12 mittels Spritzgussverfahren kostengünstig gefertigt werden. Daher ist es unproblematisch, diese als "verlorenes Teil" bzw. als "Einwegbauteil" zu gestalten. Sollte es also beispielsweise im Rahmen einer Reparatur (oder aus anderen Gründen) erforderlich sein, die relative Position von Elektromotor 3 und Ausgabetrichter 2 zu verändern, kann die Verriegelungskrone 12 zur Demontage zerstört werden und durch ein neues Teil ersetzt werden, ohne dass hierdurch ein nennenswerter wirtschaftlicher Verlust auftritt.

Weiterhin sind in Fig. 2 auch die wesentlichen Elemente der bajonettverschlussartigen Verbindung zur mechanischen Kopplung von Mahlwerkseinheit 6 und Antriebseinheit 11 zu erkennen.

In einem unteren Bereich der Mahlwerkseinheit 6 ist ringartig eine Reihenfolge von Querstegen 15 angeordnet (im vorliegenden Beispiel mit einer 30°-Rasterung; die "angulare Breite" eines Querstegs 15 beträgt etwas weniger als 15°, da zusätzlich zu der "angularen Breite" der Verriegelungsstifte 13 noch eine gewisse "Reserve" für die Drehbegrenzungsstege 17 sowie für ein gewisses Spiel vorgesehen werden müssen.

Korrespondierend zu den Querstegen 15 ist an der Innenseite des Kopplungsbereichs 18 von Mahlwerkseinheit 6 und Antriebseinheit 11 eine Abfolge von Hintergreifstegen 16 und hieran anschliessenden (vorliegend einstückig angeformten) Drehbegrenzungsstegen 17 zu erkennen (vorliegend ebenfalls in 30°-Rasterung). Die Querstege 15 und die Hintergreifstege 16 bewirken nach einer Steck-Dreh-Bewegung, dass Mahlwerkseinheit 6 und Antriebseinheit 11 nicht mehr durch eine einfache Zugbewegung auseinandergezogen werden können. Die Drehbegrenzungsstege 17 bewirken, dass die Drehbewegung nicht "überdreht" werden kann, sodass Querstege 15 und Hintergreifstege 16 beispielsweise wieder ausser Eingriff geraten könnten. Hierdurch wird eine besonders einfache und intuitive Montage des Kaffeeautomatenmahlwerks 1 ermöglicht.

In den Fig. 3 - 6 werden die Schritte zum Zusammenfügen eines Kaffeeautomatenmahlwerks 1 (gemäss dem ersten Ausführungsbeispiel, wie dieses in den Fig. 1 und 2 dargestellt ist) aus den drei "Grundbaugruppen" Mahlwerkseinheit 6, Antriebseinheit 11 und Verriegelungskrone 12 dargestellt und im Folgenden näher erläutert. Dabei ist in den Fig. 3 - 6 jeweils in den Teilfiguren a) eine perspektivische Ansicht des Kaffeeautomatenmahlwerks 1 (bzw. von dessen Teilbaugruppen Mahlwerkseinheit 6, Antriebseinheit 11 und Verriegelungskrone 12) dargestellt, wohingegen in den Teilfiguren b) eine vergrösserte Querschnittsansicht eines Teilbereichs des Kopplungsbereichs 18 von Mahlwerkseinheit 6 und Antriebseinheit 11 (später auch der Verriegelungskrone 12 in Position) dargestellt ist, die die Details der Steck-Dreh-Verrastungs-Fügeverbindung der Baugruppen des Kaffeeautomatenmahlwerks 1 besser verdeutlichen soll.

In einem ersten Schritt (Fig. 3) werden zunächst die Mahlwerkseinheit 6 und die Antriebseinheit 11 durch eine Aufeinander-zu-Bewegung (antiparallele Fügepfeile 19) in ihrem Kopplungsbereich 18 zusammengesteckt, wobei das Zahnrad 7 derart in den ringförmigen Bereich 11a der Antriebseinheit eingeführt wird, dass das Zahnrad 7 in Eingriff mit der Antriebsschnecke 10 gebracht wird. Um die Fügebewegung realisieren zu können, müssen dabei die Querstege 15 so ausgerichtet sein, dass sie jeweils fluchtend zu den Lücken zwischen zwei Hintergreifstegen 16 liegen (vergleiche auch Fig. 2). Hierdurch wird auch ersichtlich, dass der Fügevorgang durch ein gewisses "angulares Spiel" vereinfacht wird, weshalb die "angulare Länge" aus Quersteg 15, Hintergreifsteg 16 und Drehbegrenzungssteg 17 in Summe etwas kleiner ist, als es der Rasterung entspricht (vorliegend 30°-Rasterung). Die Fügebewegung längs der antiparallelen Fügepfeile 19 erfolgt solange, bis Mahlwerkseinheit 6 und Antriebseinheit 11 "fest" aufeinander gesteckt sind. In dieser Position befinden sich die Querstege 15 "unterhalb" der Hintergreifstege 16 (entsprechende Situation in Fig. 3b); in Fig. 3a) ist die Zusammenfügebewegung noch nicht vollständig realisiert.

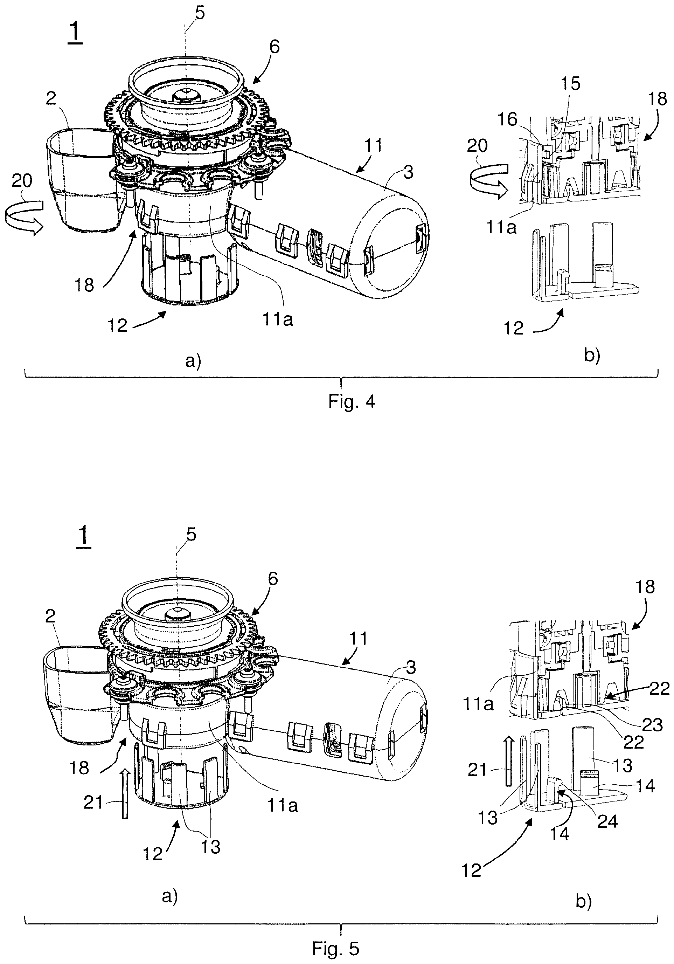

Der Vollständigkeit halber wird darauf hingewiesen, dass die in den Fig. 3 und 4 jeweils eingezeichnete Verriegelungskrone 12 für die dort dargestellten Montageschritte unerheblich ist und ohne Weiteres auch in einer Vorratsdose griffbereit gelagert sein kann.

Nachdem die Zusammenfügebewegung entlang der Fügepfeile 19 vollständig abgeschlossen ist, wird eine Verdrehbewegung (dargestellt durch den Verdrehpfeil 20; siehe Fig. 4) von Mahlwerkseinheit 6 und Antriebseinheit 11 relativ zueinander durchgeführt. Hierdurch schieben sich die Hintergreifstege 16 hinter die jeweils korrespondierenden Rückseiten der Querstege 15. Dies bewirkt, dass die beiden Baugruppen Mahlwerkseinheit 6 und Antriebseinheit 11 nicht mehr durch eine einfache Zugbewegung voneinander gelöst werden können.

Um für den Monteur die Montage zu erleichtern, sind die bereits erwähnten Drehbegrenzungsstege 17 vorgesehen. Diese bewirken einen "Anschlag" in angularer Richtung. Daher ist ein "Zu-weit-Drehen" der beiden Baugruppen 6, 11 relativ zueinander (was zur Folge haben könnte, dass Querstege 15 und Hintergreifstege 16 wieder ausser Eingriff geraten könnten) nicht möglich.

Nach Abschluss der Verdrehbewegung (Verdrehpfeil 20) sind die Drehbegrenzungsstege 17 auf Ihrer L-Innenseite in Kontakt mit den jeweiligen Seitenwänden der Hintergreifstege 16. Nun erfolgt der in Fig. 5 dargestellte Verriegelungsschritt. Hierzu wird die Verriegelungskrone 12 in "angular korrekter Position" in den Kopplungsbereich 18 zwischen Mahlwerkseinheit 6 und Antriebseinheit 11 hineingeschoben (in die Richtung, die durch den Verschiebepfeil 21 angedeutet wird). Die Verriegelungsstifte 13 werden dabei so in den Kopplungsbereich 18 geschoben, dass diese schlussendlich in den Lücken zwischen den einzelnen Hintergreifstegen 16 zu liegen kommen. Es wird darauf hingewiesen, dass zum Zeitpunkt der Durchführung des in Fig. 5 dargestellten Verriegelungsschritts die Querstege 15 und die Hintergreifstege 16 gewissermassen fluchtend in Axialrichtung hintereinander positioniert sind. Durch das Einschieben der Verriegelungsstifte 13 in die vorhandenen Lücken wird eine Rück-Drehbewegung von Mahlwerkseinheit 6 und Antriebseinheit 11 gegeneinander unmöglich gemacht. Denn die Querstege 15 stossen gegebenenfalls nach einer nur geringfügigen angularen Wegstrecke mit ihrer dem Schenkel des L gegenüberliegenden Seite (dem Kontaktbereich mit der den Drehbegrenzungsstegen 17 gegenüberliegenden Seite) nunmehr an die Verriegelungsstifte 13 an. Hierdurch wiederum ist es nicht möglich, dass Querstege 15 und Hintergreifstege 16 ausser Eingriff geraten können (zumindest solange die Verriegelungskrone 12 in Position ist) und sich Mahlwerkseinheit 6 und Antriebseinheit 11 voneinander lösen können.

Um die in angularer Richtung lagerichtige Position für den Monteur leicht ersichtlich zu machen, sind korrespondierend zu den Einschnappstiften 14 schlitzartige Ausnehmungen 22 in einem Bodenbereich des Kopplungsbereichs 18 der Antriebseinheit 11 vorgesehen. Die angulare Breite der schlitzartigen Ausnehmungen 22 ist im Wesentlichen gleich mit der angularen Breite der Einschnappstifte 14. Die Position ist so gewählt, dass sich die angular-lagerichtige Position der Verriegelungsstifte 13 "automatisch" ergibt.

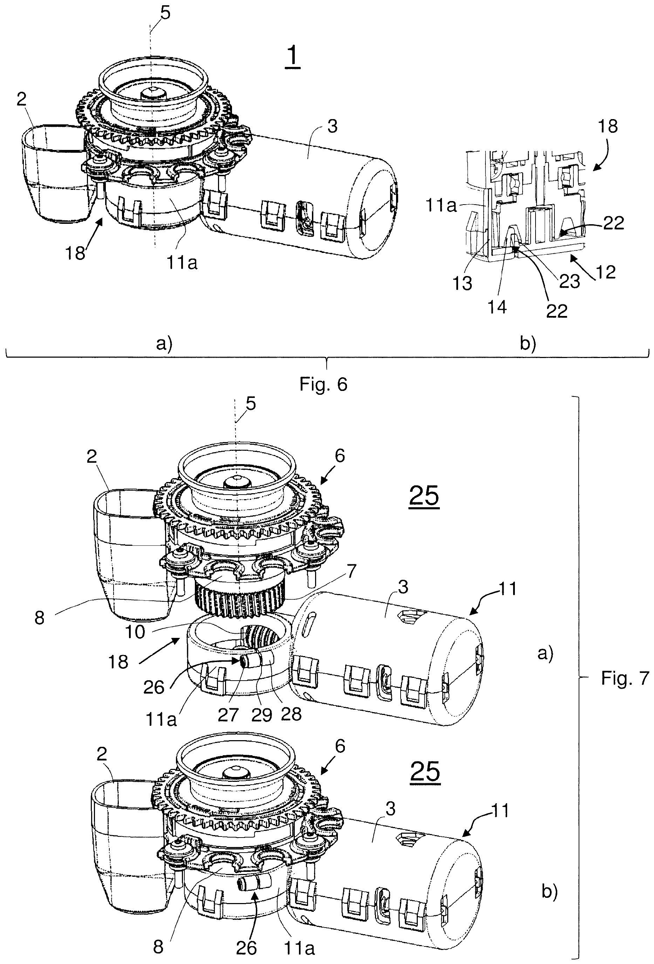

Wird die Verriegelungskrone 12 vollständig eingedrückt, so verrasten die vorspringenden Nasen 24 der Einschnappstifte 14 mit geeignet ausgebildeten Stegen 23 im Bereich der schlitzartigen Ausnehmungen 22 (Fig. 6).

Auf diese Weise ergibt sich eine Gesamtanordnung des Kaffeeautomatenmahlwerks 1, wobei sich die Grundbaugruppen des Kaffeeautomatenmahlwerks 1 nicht mehr ohne Weiteres voneinander lösen lassen. Es wird jedoch nochmals darauf hingewiesen, dass der beschriebene Zusammenfügevorgang des Kaffeeautomatenmahlwerks 1 in unterschiedlichen angularen Positionen von Ausgabetrichter 2 und Elektromotor 3 zueinander möglich ist. Der in den Fig. 2 - 6 dargestellte Winkel zwischen Ausgabetrichter 2 und Elektromotor 3 ist lediglich als Beispiel aufzufassen.

Im Übrigen ist es beispielsweise mithilfe eines Schraubendrehers möglich, die Verriegelungskrone 12 wieder aus dem Kopplungsbereich 18 herauszuziehen (gegebenenfalls herauszubrechen). Dadurch wiederum wird es möglich, dass Mahlwerkseinheit 6 und Antriebseinheit 11 wieder voneinander getrennt werden können. Sollte dabei die Verriegelungskrone 12 zu Bruch gehen, so ist dies im Wesentlichen unerheblich, da es sich um ein einfaches und kostengünstig herstellbares Bauteil handelt, beispielsweise um ein Spritzgussbauteil aus Kunststoff.

In Fig. 7 ist schliesslich ein zweites Ausführungsbeispiel für ein Kaffeeautomatenmahlwerk 25 dargestellt. Die Teilfig. 7a) zeigt dabei den Zustand vor dem Zusammenfügen der Hauptbaugruppen Mahlwerkseinheit 6 und Antriebseinheit 11. In Teilfig. b) sind die beiden Hauptbaugruppen 6, 11 bereits zusammengefügt, wobei ein unterer Rand der Gehäusung 8 der Mahlwerkseinheit 6 und das Zahnrad 7 derart in den ringförmigen Bereich 11a der Antriebseinheit 11 eingeführt ist, dass der untere Rand der Gehäusung 8 der Mahlwerkseinheit 6 von dem Bereich 11a der Antriebseinheit 11 ringförmig umgeben ist und das Zahnrad 7 in Eingriff mit der Antriebsschnecke 10 gebracht ist. In beiden Teilfiguren a) und b) der Fig. 7 ist jeweils eine perspektivische Ansicht gewählt. Ein Hauptteil der verwendeten Baugruppen stimmt mit dem in den Fig. 1 - 6 dargestellten und vorab näher erläuterten Baugruppen eines Kaffeeautomatenmahlwerks 1 überein.

Abweichend vom ersten Ausführungsbeispiel ist beim vorliegend dargestellten Ausführungsbeispiel eines Kaffeeautomatenmahlwerks 25 eine Relativpositionierung von Mahlwerkseinheit 6 und Antriebseinheit 11 (Ausgabetrichter 2 und Elektromotor 3) mit beliebigen Relativwinkeln möglich. Es sind also nicht nur einzelne, diskrete Winkellagen zueinander möglich, sondern vielmehr ist eine stufenlose Anpassbarkeit der Winkellagen möglich. Dies wird dadurch erreicht, dass - falls die Mahlwerkseinheit 6 und die Antriebseinheit 11 gemäss der Darstellung in der Teilfigur b) der Fig. 7 zusammengesetzt ist - der ringförmige Bereich 11a derart auf dem unteren Rand der Gehäusung 8 der Mahlwerkseinheit 6 drehbar gelagert ist, dass die Antriebseinheit 11 um die Rotationsachse 5 der Mahlwerkseinheit 6 drehbar ist.

Lediglich der Vollständigkeit halber wird darauf hingewiesen, dass beim vorliegend dargestellten zweiten Ausführungsbeispiel eines Kaffeeautomatenmahlwerks 25 analog zum ersten Ausführungsbeispiel ein "verbotener Bereich" der relativen Lagen von Ausgabetrichter 2 und Elektromotor 3 gegeben ist, was sich ebenfalls aus geometrischen Gründen ergibt und vorab näher erläutert wurde.

Um die stufenlose Anpassbarkeit des zweiten Ausführungsbeispiels eines Kaffeeautomatenmahlwerks 25 zu realisieren, ist am ringförmigen Bereich 11a der Antriebseinheit 11 im Bereich des Kopplungsbereichs 18 zwischen Mahlwerkseinheit 6 und Antriebseinheit 11 eine Längenvariationseinrichtung 26 nach Art einer Schlauchschelle vorgesehen. Die Längenvariationseinrichtung 26 besteht im dargestellten Beispiel aus einer Schraube 27, die durch eine Drehbewegung in ein Innengewinde 28 hinein- bzw. aus diesem herausgeschraubt werden kann. Durch die Drehbewegung der Schraube 27 wird dementsprechend ein Radialschlitz 29 grösser oder kleiner, was ein Festklemmen bzw. Lösen der im Kopplungsbereich 18 ineinander gesteckten Bereiche von Mahlwerkseinheit 6 und Antriebseinheit 11 bewirkt. Wird der Radialschlitz 29 durch Drehen der Schraube 27 auf ein vorgegebenes Mass verkleinert, wird der Durchmesser des ringförmigen Bereichs 11a derart verkleinert, dass der ringförmige Bereich 11a der Antriebseinheit 11 auf dem unteren Rand der Gehäusung 8 der Mahlwerkseinheit 6 fest sitzt und die Antriebseinheit 11 somit nicht mehr relativ zur Mahlwerkseinheit 6 bzw. zum Ausgabetrichter 2 drehbar ist. Wird der Radialschlitz 29 durch Drehen der Schraube 27 wieder vergrössert, so wird der ringförmige Bereich 11a der Antriebseinheit 11 wieder vom unteren Rand der Gehäusung 8 der Mahlwerkseinheit 6 gelöst, sodass die Antriebseinheit 11 anschliessend wieder um die Rotationsachse 5 gedreht und in eine andere Winkellage relativ zum Ausgabetrichter 2 gebracht werden kann.

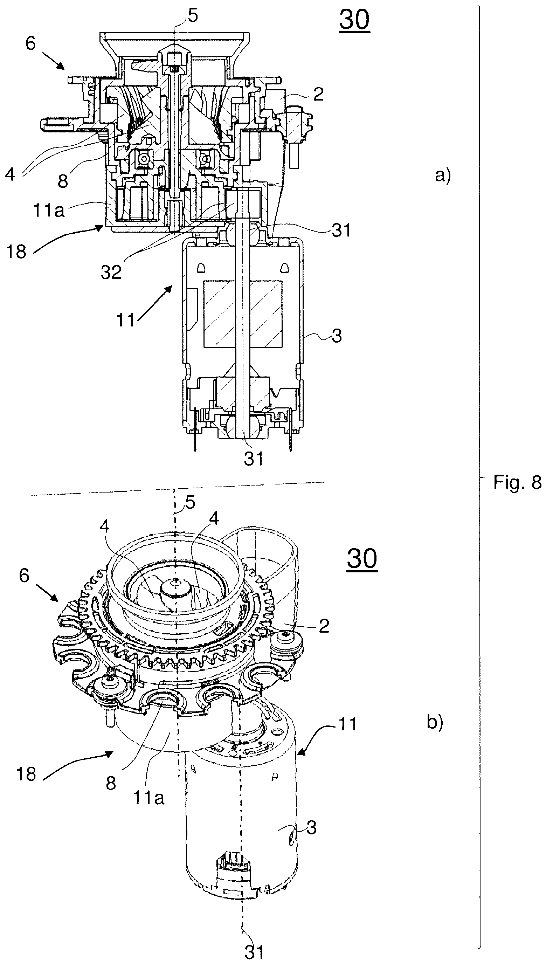

In Fig. 8 ist schliesslich noch ein drittes Ausführungsbeispiel eines Kaffeeautomatenmahlwerks 30 dargestellt. Mit diesem soll verdeutlicht werden, dass es durchaus auch möglich ist, dass die Motorenspindel 31 des Elektromotors 3 parallel, aber seitlich versetzt zu einer Rotationsachse 5 der Mahlkörper 4 einer Mahlwerkseinheit 6 angeordnet werden kann. Dennoch ist es auch hier möglich, eine unterschiedliche angulare Anordnung von Mahlwerkseinheit 6 und Antriebseinheit 11 (Ausgabetrichter 2 und Elektromotor 3) mittels eines "variablen" Kopplungsbereichs 18 zu realisieren. Der Kopplungsbereich 18 kann dabei entweder nach Art einer Rastkupplung gemäss dem ersten Ausführungsbeispiel eines Kaffeeautomatenmahlwerks 1 oder aber auch mittels einer Längenvariationseinrichtung 26 gemäss dem zweiten Ausführungsbeispiel eines Kaffeeautomatenmahlwerks 25 erfolgen. Dementsprechend sind in Fig. 8 keine näheren Details hierzu eingezeichnet. In jedem Fall ist es möglich, die räumliche Lage der Antriebseinheit 11 relativ zum Ausgabetrichter 2 zu verändern, wobei die Antriebseinheit 11 zusammen mit dem ringförmigen Bereich 11a um die Rotationsachse 5 der Mahlwerkseinheit 6 drehbar ist.

Der Vollständigkeit halber wird darauf hingewiesen, dass beim dargestellten dritten Ausführungsbeispiel eines Kaffeeautomatenmahlwerks 30 die Kraftübertragung zwischen Motorenspindel 31 und (einem der) Mahlkörper 4 mittels zweier ineinandergreifender Zahnräder 32 erfolgt.

## Patentansprüche

1. Mahlwerksvorrichtung (1, 25, 30) zum Mahlen von Mahlgut, insbesondere zum Mahlen von Kaffeebohnen, aufweisend ein erstes Mahlelement (4) und ein zweites Mahlelement (4), wobei das erste Mahlelement (4) und das zweite Mahlelement (4) durch Antrieb über eine Antriebswelleneinrichtung (10, 31) relativ zueinander um eine Mahlrotationsachse (5) drehbar sind, und wobei die Antriebswelleneinrichtung (10, 31) abweichend von der Mahlrotationsachse (5) positioniert, insbesondere angeordnet und/oder ausgerichtet ist, sowie eine seitlich zu den Mahlelementen (4) angeordnete Ausgabeöffnungseinrichtung (2) für gemahlenes Mahlgut **dadurch gekennzeichnet, dass** die Ausgabeöffnungseinrichtung (2) und die Antriebswelleneinrichtung (10, 31) unterschiedlich zueinander positionierbar sind.

2. Mahlwerksvorrichtung (1, 25, 30) nach Anspruch 1, **dadurch gekennzeichnet, dass** die Ausgabeöffnungseinrichtung (2) und die Antriebswelleneinrichtung (10, 31) zumindest bereichsweise stufenlos unterschiedlich zueinander positionierbar sind.

3. Mahlwerksvorrichtung (1, 25, 30) nach Anspruch 1 oder 2, insbesondere nach Anspruch 1, **dadurch gekennzeichnet, dass** die Ausgabeöffnungseinrichtung (2) und die Antriebswelleneinrichtung (10, 31) zumindest bereichsweise gestuft unterschiedlich zueinander positionierbar sind.

4. Mahlwerksvorrichtung (1, 25, 30) nach einem der vorangehenden Ansprüche, **dadurch gekennzeichnet, dass** die unterschiedliche Positionierbarkeit von Ausgabeöffnungseinrichtung (2) und Antriebswelleneinrichtung (10, 31) zueinander sich zumindest auf eine Winkellage von Ausgabeöffnungseinrichtung (2) und Antriebswelleneinrichtung (10, 31) zueinander bezieht, insbesondere in einer Ebene, die normal zur Mahlrotationsachse (5) steht.

5. Mahlwerksvorrichtung (1, 25, 30) nach einem der vorangehenden Ansprüche, **dadurch gekennzeichnet, dass** die Mahlwerksvorrichtung (1, 25, 30) zwei miteinander koppelbare Baugruppen (6, 11) aufweist, wobei die erste der miteinander koppelbaren Baugruppen (6) die Ausgabeöffnungseinrichtung (2) und die zweite der miteinander koppelbaren Baugruppen (11) die Antriebswelleneinrichtung (10, 31) aufweist.

6. Mahlwerksvorrichtung (1, 25, 30) nach einem der vorangehenden Ansprüche, **dadurch gekennzeichnet, dass** die Antriebswelleneinrichtung (10) und die Mahlrotationsachse (5) windschief zueinander stehen und insbesondere einen im Wesentlichen rechten Winkel zueinander einschliessen, wobei bevorzugt die Kopplung von Antriebswelleneinrichtung (10, 31) und wenigstens einem Mahlelement (4) unter Verwendung einer schneckentriebartigen Kopplung (10) erfolgt.

7. Mahlwerksvorrichtung (1, 25, 30) nach einem der vorangehenden Ansprüche, insbesondere nach einem der Ansprüche 1 bis 5, **dadurch gekennzeichnet, dass** die Antriebswelleneinrichtung (31) und die Mahlrotationsachse (5) beabstandet zueinander angeordnet sind und insbesondere im Wesentlichen parallel zueinander verlaufen, wobei bevorzugt die Kopplung von Antriebswelleneinrichtung (31) und wenigstens einem Mahlelement (4) unter Verwendung einer Kraftübertragungsanordnung erfolgt, insbesondere unter Verwendung eines Kettenantriebs, eines Riemenantriebs oder eines Zahnradantriebs (32).

8. Mahlwerksvorrichtung (1, 25, 30) nach einem der vorangehenden Ansprüche, **gekennzeichnet durch** eine Positionsfixierungseinrichtung (12, 26) zur Fixierung der Position von Antriebswelleneinrichtung (10, 31) und Ausgabeöffnungseinrichtung (2) relativ zueinander, welche bevorzugt als reversible Positionsfixierungseinrichtung (26) und/oder als irreversible Positionsfixierungseinrichtung (12) ausgebildet ist.

9. Mahlwerksvorrichtung (1, 25, 30) nach Anspruch 8, **dadurch gekennzeichnet, dass** die Positionsfixierungseinrichtung (12, 26) kraftschlüssig und/oder formschlüssig und/oder stoffschlüssig wirkt und/oder als verrastende, insbesondere als clipsartig (14) und/oder bajonettartig (15, 16) verrastende Einrichtung ausgebildet ist.

10. Mahlwerksvorrichtung (1, 25, 30) nach einem der Ansprüche 8 - 9, **dadurch gekennzeichnet, dass** die Positionsfixierungseinrichtung (12) zumindest teilweise als gesondert handhabbare Einrichtung (12) ausgebildet ist und/oder zumindest teilweise mit einer gesondert handhabbaren Einrichtung zusammenwirkt.

11. Mahlwerksvorrichtung (1, 25, 30) nach einem der vorangehenden Ansprüche, **gekennzeichnet durch** eine vorzugsweise integrierte Antriebseinrichtung (3), insbesondere durch einen vorzugsweise integrierten Elektromotor (3).

12. Mahlwerksvorrichtung (1, 25, 30) nach einem der vorangehenden Ansprüche, **gekennzeichnet durch** eine Brühvorrichtung.

13. Mahlwerksvorrichtung (1, 25, 30) nach einem der vorangehenden Ansprüche, **gekennzeichnet durch** genau eine und/oder eine Mehrzahl von Ausgabeöffnungseinrichtung (2) und/oder **dadurch, dass** zumindest eine Ausgabeöffnungseinrichtung (2) in einem radialen Aussenbereich zumindest eines Mahlelements (4) angeordnet ist.

14. Mahlwerksvorrichtung (1, 25, 30) nach einem der vorangehenden Ansprüche, **gekennzeichnet durch** zumindest eine Mahlwerksgehäusung, insbesondere eine Mahlwerksgehäusung mit zumindest einer integral ausgebildeten Ausgabeöffnungseinrichtung.

15. Kaffeemühle, Kaffeemaschine oder Kaffeevollautomat, aufweisend eine Mahlwerksvorrichtung (1, 25, 30) nach einem der vorangehenden Ansprüche.

## Claims

1. A grinding device (1, 25, 30) for grinding material to be ground, particularly for grinding coffee beans, featuring a first grinding element (4) and a second grinding element (4), as well as an outlet opening device for ground material that is arranged laterally of the grinding elements (4), wherein the first grinding element (4) and the second grinding element (4) can be driven by means of a driveshaft device (10, 31) such that they rotate relative to one another about a rotational grinding axis (5), and wherein the driveshaft device (10, 31) is positioned, particularly arranged and/or aligned, divergent from the rotational grinding axis (5), **characterized in that** the output opening device (2) and the driveshaft device (10, 31) can be positioned differently relative to one another.

2. The grinding device (1, 25, 30) according to claim 1, **characterized in that** the output opening device (2) and the driveshaft device (10, 31) can be at least sectionally positioned differently relative to one another in a continuous fashion.

3. The grinding device (1, 25, 30) according to claim 1 or 2, particularly according to claim 1, **characterized in that** the output opening device (2) and the driveshaft device (10, 31) can be at least sectionally positioned differently relative to one another in an incremental fashion.

4. The grinding device (1, 25, 30) according to one of the preceding claims, **characterized in that** the different positioning of the output opening device (2) and the driveshaft device (10, 31) relative to one another refers at least to an angular position of the output opening device (2) and the driveshaft device (10, 31) relative to one another, particularly in a plane extending normal to the rotational grinding axis (5).

5. The grinding device (1, 25, 30) according to one of the preceding claims, **characterized in that** the grinding device (1, 25, 30) features two subassemblies (6, 11) that can be coupled to one another, wherein the first of the subassemblies (6), which can be coupled to one another, features the output opening device (2) and the second of the subassemblies (11), which can be coupled to one another, features the driveshaft device (10, 31).

6. The grinding device (1, 25, 30) according to one of the preceding claims, **characterized in that** the driveshaft device (10) and the rotational grinding axis (5) extend skewed to one another and particularly include an essentially right angle with one another, wherein the coupling between the driveshaft device (10, 31) and at least one grinding element (4) is preferably realized by utilizing a coupling (10) by means of a worm gear.

7. The grinding device (1, 25, 30) according to one of the preceding claims, particularly according to one of claims 1-5, **characterized in that** the driveshaft device (31) and the rotational grinding axis (5) are spaced apart from one another and particularly extend essentially parallel to one another, wherein the coupling between the driveshaft device (31) and at least one grinding element (4) is preferably realized by utilizing a power transmission arrangement, particularly by utilizing a chain drive, a belt drive or a gearwheel drive (32).

8. The grinding device (1, 25, 30) according to one of the preceding claims, **characterized by** a position fixing device (12, 26) for fixing the position of the driveshaft device (10, 31) and the output opening device (2) relative to one another, wherein said position fixing device is preferably realized in the form of a reversible position fixing device (26) and/or in the form of an irreversible position fixing device (12).

9. The grinding device (1, 25, 30) according to claim 8, **characterized in that** the position fixing device (12, 26) acts non-positively and/or positively and/or integrally and/or is realized in the form of an interlocking device, particularly a device that interlocks in a clip-like (14) and/or in a bayonet-like (15, 16) fashion.

10. The grinding device (1, 25, 30) according to one of claims 8-9, **characterized in that** the position fixing device (12) is at least partially realized in the form of a device (12) that can be handled separately and/or at least partially cooperates with a device that can be handled separately.

11. The grinding device (1, 25, 30) according to one of the preceding claims, **characterized by** a preferably integrated drive unit (3), particularly a preferably integrated electric motor (3).

12. The grinding device (1, 25, 30) according to one of the preceding claims, **characterized by** a brewing device.

13. The grinding device (1, 25, 30) according to one of the preceding claims, **characterized by** just one and/or a multitude of output opening devices (2) and/or in that at least one output opening device (2) is arranged in a radially outer region of at least one grinding element (4) .

14. The grinding device (1, 25, 30) according to one of the preceding claims, **characterized by** at least one grinder casing, particularly a grinder casing with at least one integrally designed output opening device.

15. A coffee grinder, coffee machine or fully automated coffee machine featuring a grinding device (1, 25, 30) according to one of the preceding claims.

## Revendications

1. Dispositif broyeur (1, 25, 30) destiné au broyage de produits à broyer, notamment au broyage de grains de café, comportant un premier élément broyeur (4) et un deuxième élément broyeur (4), le premier élément broyeur (4) et le deuxième élément broyeur (4) étant rotatifs l'un par rapport à l'autre autour d'un axe de rotation en broyage (5), par entraînement par l'intermédiaire d'un système d'arbre d'entraînement (10, 31) et le système d'arbre d'entraînement (10, 31) étant positionné, notamment placé et/ou orienté différemment de l'axe de rotation en broyage (5), ainsi qu'un système d'orifice distributeur (2) placé latéralement des éléments de broyage (4) pour le produit à broyer broyé, **caractérisé en ce que** le système d'orifice distributeur (2) et le système d'arbre d'entraînement (10, 31) sont différemment positionnables l'un par rapport à l'autre.

2. Dispositif broyeur (1, 25, 30) selon la revendication 1, **caractérisé en ce qu'**au moins par endroits, le système d'orifice distributeur (2) et le système d'arbre d'entraînement (10, 31) sont différemment positionnables en continu l'un par rapport à l'autre.

3. Dispositif broyeur (1, 25, 30) selon la revendication 1 ou 2, notamment selon la revendication 1, **caractérisé en ce qu'**au moins par endroits, le système d'orifice distributeur (2) et le système d'arbre d'entraînement (10, 31) sont différemment positionnables graduellement l'un par rapport à l'autre.

4. Dispositif broyeur (1, 25, 30) selon l'une quelconque des revendications précédentes, **caractérisé en ce que** la possibilité de positionnement différent du système d'orifice distributeur (2) et du système d'arbre d'entraînement (10, 31) l'un par rapport à l'autre se rapporte au moins à une position angulaire du système d'orifice distributeur (2) et du système d'arbre d'entraînement (10, 31) l'un par rapport à l'autre, notamment dans un plan, qui est à la normale par rapport à l'axe de rotation en broyage (5) .

5. Dispositif broyeur (1, 25, 30) selon l'une quelconque des revendications précédentes, **caractérisé en ce que** le dispositif broyeur (1, 25, 30) comporte deux ensembles (6, 11) pouvant être couplés l'un à l'autre, le premier (6) des ensembles pouvant être couplés l'un à l'autre comportant le système d'orifice distributeur (2) et le deuxième (11) des ensembles pouvant être couplés l'un à l'autre comportant le système d'arbre d'entraînement (10, 31).

6. Dispositif broyeur (1, 25, 30) selon l'une quelconque des revendications précédentes, **caractérisé en ce que** le système d'arbre d'entraînement (10) et l'axe de rotation en broyage (5) sont obliques l'un par rapport à l'autre et forment ensemble notamment un angle sensiblement droit, sachant que de préférence le couplage du système d'arbre d'entraînement (10, 31) et d'au moins un élément broyeur (4) s'effectue en utilisant un couplage (10) de type transmission à vis sans fin.

7. Dispositif broyeur (1, 25, 30) selon l'une quelconque des revendications précédentes, notamment selon l'une quelconque des revendications 1 à 5, **caractérisé en ce que** le système d'arbre d'entraînement (31) et l'axe de rotation en broyage (5) sont placés en étant écartés l'un de l'autre et s'écoulent notamment sensiblement à la parallèle l'un de l'autre, sachant que de préférence, le couplage du système d'arbre d'entraînement (31) et d'au moins un élément broyeur (4) s'effectue en utilisant un agencement de transmission de force, notamment en utilisant un entraînement par chaîne, un entraînement par courroie ou un engrenage (32).

8. Dispositif broyeur (1, 25, 30) selon l'une quelconque des revendications précédentes, **caractérisé par** un système fixateur de position (12, 26) destiné à fixer la position du système d'arbre d'entraînement (10, 31) et du système d'orifice distributeur (2) l'un par rapport à l'autre, lequel est conçu de préférence sous la forme d'un système fixateur de position (26) réversible et/ou sous la forme d'un système fixateur de position (12) irréversible.

9. Dispositif broyeur (1, 25, 30) selon la revendication 8, **caractérisé en ce que** le système fixateur de position (12, 26) agit par complémentarité de force et/ou par complémentarité de forme et/ou par liaison de matière et/ou en tant que système par enclenchement, notamment par enclenchement par clip (14) et/ou par baïonnette (15, 16).

10. Dispositif broyeur (1, 25, 30) selon l'une quelconque des revendications 8-9, **caractérisé en ce que** le système fixateur de position (12) est conçu au moins en partie sous la forme d'un système (12) à manipulation séparée et/ou coopère au moins en partie avec un système à manipulation séparée.

11. Dispositif broyeur (1, 25, 30) selon l'une quelconque des revendications précédentes, **caractérisé par** un système d'entraînement (3), de préférence intégré, notamment un moteur électrique (3), de préférence intégré.

12. Dispositif broyeur (1, 25, 30) selon l'une quelconque des revendications précédentes, **caractérisé par** un dispositif d'infusion.

13. Dispositif broyeur (1, 25, 30) selon l'une quelconque des revendications précédentes, **caractérisé par** exactement un et/ou une pluralité de systèmes d'orifice distributeur (2) et/ou en ce qu'au moins un système d'orifice distributeur (2) est placé dans une zone extérieure radiale d'au moins un élément broyeur (4).

14. Dispositif broyeur (1, 25, 30) selon l'une quelconque des revendications précédentes, **caractérisé par** au moins un carter de dispositif broyeur, notamment un carter de dispositif broyeur avec au moins un système d'orifice distributeur conçu en version intégrale.

15. Moulin à café, machine à café ou distributeur automatique de café, comportant un dispositif broyeur (1, 25, 30) selon l'une quelconque des revendications précédentes.
